Europäisches Patentamt

European Patent Office

Office européen des brevets

(19)

(11) Numéro de publication: **0 030 193**
**B1**

# (12) FASCICULE DE BREVET EUROPEEN

(45) Date de publication du fascicule du brevet:
**10.08.83**

(51) Int. Cl.³: **F 24 J 3/02**

(21) Numéro de dépôt: **80401698.8**

(22) Date de dépôt: **28.11.80**

(54) **Capteur solaire gonflable et procédé de fabrication des feuilles souples de ce capteur.**

(30) Priorité: **30.11.79 FR 7929576**

(43) Date de publication de la demande:
**10.06.81 Bulletin 81/23**

(45) Mention de la délivrance du brevet:
**10.08.83 Bulletin 83/32**

(84) Etats contractants désignés:
**AT BE CH DE GB IT LI LU NL SE**

(56) Documents cités:
**EP-A-0 003 478**
**EP-A-0 006 844**
**BE-A-876 401**
**DE-A-2 840 019**
**FR-A-1 319 144**
**FR-A-2 261 489**
**FR-A-2 330 972**
**FR-A-2 362 347**
**US-A-3 182 654**

(73) Titulaire: **CENTRE NATIONAL DU MACHINISME AGRICOLE, DU GENIE RURAL, DES EAUX ET DES FORETS (CEMAGREF), Parc de Tourvoie, F-92160 Antony (FR)**

(72) Inventeur: **Lucas, Jean, Parc de Tourvoie, F-92160 Antony (FR)**
Inventeur: **Sylla, Lanciné, Parc de Tourvoie, F-92160 Antony (FR)**

(74) Mandataire: **Lemonnier, André et al, Cabinet LEMONNIER 4, Boulevard Saint-Denis, F-75010 Paris (FR)**

ACTORUM AG

Capteur solaire gonflable et procédé de fabrication des feuilles souples de ce capteur

L'invention concerne un capteur solaire comme décrit dans le préambule de la revendication 1, ainsi qu'un procédé de fabrication des feuilles souples de ce collecteur.

On a déjà proposé, par exemple dans le brevet FR-A No 1319144 du 5 octobre 1962, de capter l'énergie solaire avec un dispositif comportant un collecteur ou récepteur capable d'absorber le rayonnement solaire incident et de le convertir en chaleur ou en énergie électrique, ce collecteur ou récepteur étant placé dans la région focale d'un réflecteur convergent. Il est également connu par ce brevet de donner au réflecteur une forme cylindrique de directrice circulaire et de placer le récepteur oblong, en fait réalisé par un ou des tubes parallèles à l'axe, dans la zone focale de ce récepteur.

Dans le but de réaliser un dispositif léger et facile à transporter, le brevet français ci-dessus propose de réaliser le réflecteur cylindrique par une couche réfléchissante apposée sur une partie de la paroi d'une enveloppe gonflable.

Il est dit dans ce brevet qu'il est nécessaire de modifier l'inclinaison du miroir, notamment par rotation de l'enveloppe cylindrique autour de son axe, pour suivre les variations saisonnières du zénith ou de prévoir des moyens complexes pour faire suivre au réflecteur ladite variation du zénith et la variation diurne de la déclinaison du soleil ou un récepteur complexe de développement suffisant pour que le faisceau solaire tombe sur le récepteur pendant toute la durée du jour. Ce brevet avait essentiellement pour but d'éviter le montage héliostatique des miroirs paraboliques et d'utiliser efficacement les rayons focalisés d'un miroir cylindrique constitué par une partie de la paroi d'une enveloppe gonflable. Il faut, de plus, remarquer que la réalisation du capteur décrite dans ce brevet nécessitait une structure mécaniquement très résistante pour supporter l'enveloppe gonflable à ses extrémités et que les seuls moyens prévus pour éviter une déformation par rapport à la forme cylindrique exacte sont des parois d'extrémité rigides et des renforts de la paroi constitués par des nervures annulaires extérieures et/ou intérieures.

Le brevet FR-A No 2362347 du 19 août 1976 concerne un capteur solaire du même type, et enseigne seulement, par rapport au brevet ci-dessus, que l'enceinte gonflable peut avoir une section de forme biconvexe. Ce brevet n'indique par contre aucun moyen pour suivre la variation saisonnière du zénith ou la variation de la déclinaison, mais indique seulement la présence d'un support fixé à des montures ancrées dans le sol, le support étant, dans les dessins, toujours représenté incliné pour que les rayons solaires soient parallèles au plan axial du miroir. Aucun moyen n'est décrit pour protéger l'enceinte gonflable contre les déformations sous l'effet du vent.

Le brevet FR-A No 2261489 décrit également un capteur solaire à miroir cylindrique qui peut être réalisé en structure gonflable avec, au foyer dudit miroir, un capteur d'énergie. Dans ce brevet, l'enceinte est cylindrique et, dans un premier mode de réalisation, le collecteur est maintenu dans la zone focale par rotation autour de l'axe du cylindre sous le contrôle d'un asservissement classique tandis que, dans un second mode de réalisation et comme dans le brevet FR-A No 1319144, le miroir cylindrique est amené à rouler de manière contrôlée sur le sol pour suivre la déclinaison du soleil. Ce brevet n'évoque pas le problème de la résistance à la déformation de la structure gonflable contre notamment les effets du vent.

L'intérêt du capteur solaire gonflable selon les techniques analysées ci-dessus s'appuie principalement sur le faible coût du film utilisé comme miroir. Toutefois ces techniques perdent tout leur intérêt si la mise en œuvre de ces films est faite par l'intermédiaire de structures porteuses dont le coût est très élevé. En présence de cet état de la technique, l'invention a donc pour but de réaliser un capteur solaire de construction légère et économique, dans lequel la forme du réflecteur constitué par un film à surface réfléchissante ne risque pas d'être déformée par les effets du vent, problème qui est évoqué mais non parfaitement résolu dans le brevet FR-A No 1319144 ci-dessus. Dans un capteur à miroir cylindrique, le plus important est, en effet, d'éviter la déformation du film réfléchissant sous l'effet du vent. On le résout, dans les capteurs de ce type connu et dès lors que l'on veut utiliser un miroir du type en feuille mince, en augmentant la pression de gonflage ou pression appliquée sur la pellicule formant miroir ou en diminuant les rayons de courbure, la première méthode conduisant à augmenter les efforts et, en conséquence, le poids de matière au mètre carré, la seconde conduisant à augmenter la résistance mécanique de la structure pour un même rayonnement intercepté.

L'invention est fondée sur la dissociation, dans la partie réfléchissante, des moyens assurant la fonction miroir et des moyens évitant la déformation du miroir sous l'effet du vent. Ce but est atteint conformément à l'invention avec un capteur solaire du type à miroir de forme cylindrique et de directrice circulaire mis en forme par une pression gazeuse comportant un cadre rigide ayant en plan une forme sensiblement rectangulaire définissant au moins deux bords longitudinaux avec au moins une feuille déformable fixée par ses bords sur lesdits bords longitudinaux du cadre, la surface intérieure de cette feuille étant réfléchissante, avec un élément transparent étanche à la pression gazeuse de mise en forme du miroir fermant le volume, caractérisé en ce que le cadre est fixe et en ce que le volume entourant la surface extérieure de la feuille réfléchissante déformable est délimité par rapport à l'environnement par des parois indéformables sous les effets du vent.

Les parois indéformables sous les effets du vent sont dissociées de la surface réfléchissante. Elles s'élèvent de la surface de base jusqu'aux bords du cadre du capteur solaire ou aux bords périphériques de l'ensemble des cadres d'un ensemble groupé de capteurs solaires. Ces parois peuvent de plus présenter des qualités d'isolation thermique pour réduire les déperditions calorifiques par la surface extérieure du réflecteur.

Selon une autre caractéristique, et pour réduire la déformation sous l'effet du vent de l'élément transparent lorsque celui-ci est réalisé par une feuille souple mise en forme par la pression gazeuse, la largeur de cette feuille souple transparente est inférieure à 125% de l'écartement entre les deux bords longitudinaux du cadre. Cette caractéristique assure l'avantage d'un volume gonflé exposé au vent de hauteur réduite par rapport aux enceintes gonflables cylindriques de l'art antérieur. En fait, la longueur de cette feuille est choisie aussi faible que possible, donc le rayon de courbure à l'état gonflé aussi grand que possible, compte tenu de la résistance mécanique de la feuille et de la pression interne, qui peut être réduite du fait de la caractéristique principale de l'invention.

L'effet du vent, notamment du vent latéral, crée une pression sur l'un des versants et une dépression sur l'autre versant de l'élément transparent. Il est donc essentiel, lorsque cet élément est constitué par une feuille souple, d'éviter les mouvements d'air engendrés par des déformations de celui-ci susceptibles de créer une déformation du miroir souple, notamment sous l'effet de la conjugaison des pression et dépression ci-dessus. Pour éviter cette conjugaison et selon une autre caractéristique, au moins un renfort longitudinal, rigide au moins dans le sens transversal, est associé mécaniquement à la feuille transparente. Avec ce mode de réalisation, les mouvements de la partie supérieure de l'enveloppe résultant de la pression du vent sur les surfaces au vent sont pratiquement annulés. La pression interne peut donc être encore réduite, ce qui permet d'utiliser une feuille moins résistante, donc plus mince.

Du fait de la position fixe de la partie réfléchissante et du fait que la surface du miroir n'est utilisée que partiellement en fonction de la hauteur du soleil, il est souhaitable de pouvoir capter le rayonnement solaire sur le plus grand angle zénithal possible (angle de part et d'autre du zénith). En conséquence, et selon une autre caractéristique, la largeur de la feuille souple formant miroir est égale à environ 130% de l'écartement entre les deux bords longitudinaux du cadre.

La réalisation d'une enceinte gonflable conforme à l'invention pose un double problème de fixation des bords des feuilles sur les éléments du cadre et sur les éléments de renfort de la feuille supérieure et de réalisation de feuilles minces de grande largeur à partir des films du commerce.

En ce qui concerne la fixation des bords des feuilles et du fait des caractéristiques d'étanchéité modérées exigées par suite de la faible pression interne de l'enceinte qu'elles délimitent, on utilise de préférence, et conformément à l'invention, des éléments mécaniquement rigides présentant au moins une gorge tubulaire ouverte par une fente selon une génératrice, le bord plié de chaque feuille souple aboutissant à cet élément étant introduit par la fente dans la gorge tubulaire correspondante avec un élément de largeur supérieure à la largeur de la fente introduit dans le pli à l'intérieur de la gorge.

L'élément de largeur supérieure à la largeur de la gorge peut être un jonc ou une tige enfilé longitudinalement dans le pli ou un élément tubulaire introduit à l'état aplati entre les deux surfaces de la feuille à travers la fente et gonflé en place par un fluide quelconque. Les deux surfaces du bord plié sont de préférence solidarisées pour former un bord tubulaire.

Selon une variante de réalisation, la gorge tubulaire est réalisée par un élément en forme de gorge ouverte solidaire de l'élément correspondant à l'autre gorge tubulaire de l'élément rigide et par un élément complémentaire amovible en forme de gorge ouverte solidarisable avec l'élément rigide pour compléter la gorge tubulaire.

En ce qui concerne l'obtention de feuilles minces de grande largeur à partir de films du commerce et selon une caractéristique de l'invention, les feuilles minces sont obtenues par juxtaposition bord à bord de bandes transversales. Cette caractéristique est adoptée en raison des caractéristiques mécaniques et d'anisotropie des films du commerce obtenus par extrusion et étirage et de la nécessité d'éviter sur le réflecteur l'influence des aberrations longitudinales continues, qui ont plus d'influence sur le rendement du miroir cylindrique que des aberrations circulaires localisées.

Conformément à l'invention, et de préférence, les bandes transversales disposées bord à bord sont réunies au moyen d'un ruban collé sur leurs bords adjacents. Pour maintenir les bandes transversales, et notamment leurs bords pendant les opérations d'assemblage, et compte tenu de leur légèreté et des phénomènes électrostatiques, on utilise de préférence une table percée d'orifices en communication avec une source de vide au moins dans la partie de sa surface correspondant aux bords des bandes.

D'autres caractéristiques et avantages du capteur solaire conforme à l'invention apparaîtront à la lecture de la description du mode de réalisation faite ci-après à titre indicatif, mais non limitatif, avec référence aux dessins ci-annexés dans lesquels:

la fig. 1 est une vue schématique en élévation latérale partielle d'un capteur solaire conforme à l'invention;

la fig. 2 est une vue en plan partielle du capteur illustré par la fig. 1;

la fig. 3 est une vue en coupe transversale suivant la ligne III-III de la fig. 1;

la fig. 4 est une vue de détail partielle en coupe à échelle agrandie, par IV-IV, de la fig. 1;

la fig. 5 est une vue schématique en plan illustrant un assemblage de bandes de matière plastique formant une feuille souple servant à la fabrication d'une enveloppe de capteur conforme à l'invention, et

la fig. 6 est une vue en coupe transversale et à échelle agrandie illustrant un mode de réalisation d'un assemblage de deux bandes de matière plastique pour former une feuille souple telle qu'illustrée par la fig. 5.

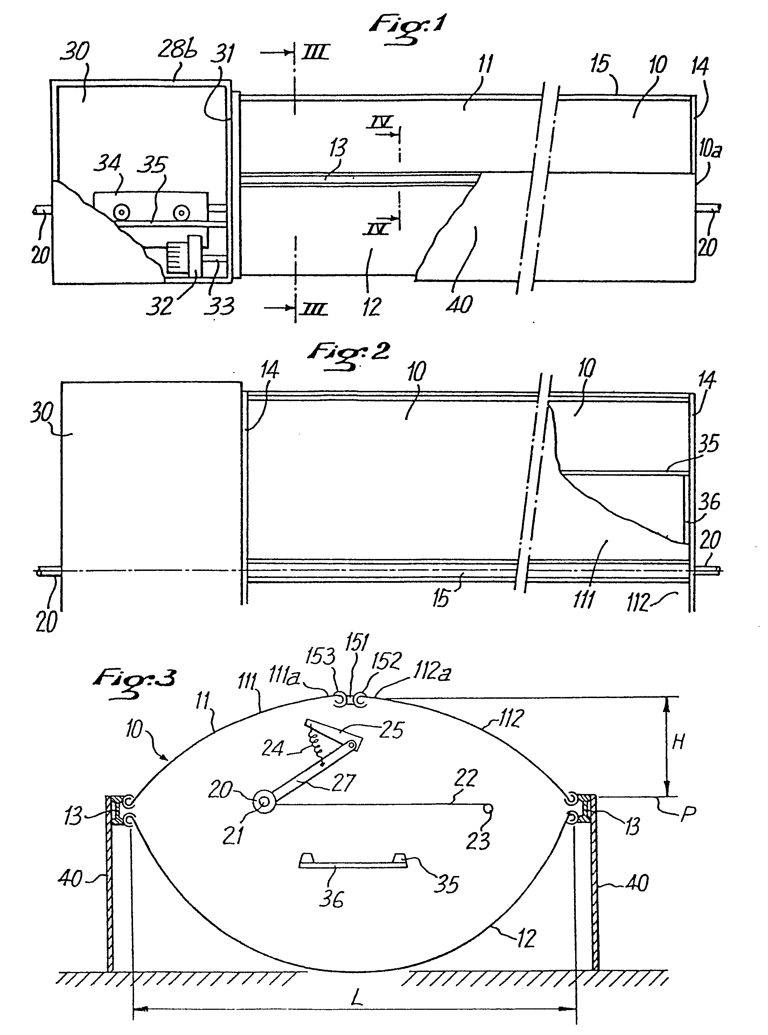

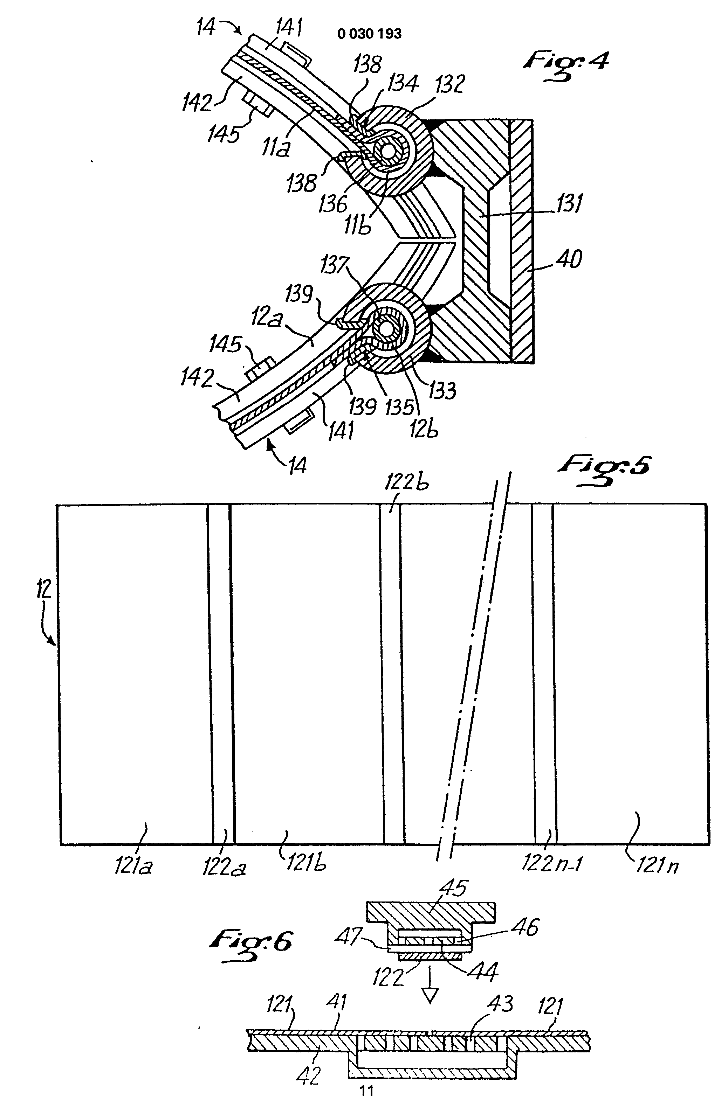

Sur les fig. 1 à 3, on a représenté un capteur solaire gonflable comportant une enveloppe souple 10, dans laquelle est logé au moins un tube longitudinal 20 parcouru par le fluide à réchauffer. A l'état gonflé, l'enveloppe 10 a une forme cylindrique d'axe sensiblement horizontal. Elle est fermée par une paroi transparente à son extrémité 10a. A son autre extrémité, l'enveloppe 10 est fermée par une cloison 31 d'un sas 30. Le sas 30 renferme un ventilateur 32 destiné à insuffler de l'air dans l'enveloppe 10 par une conduite traversant la cloison 31 afin de gonfler le capteur. Une porte de visite (non représentée) est formée dans la paroi 31 pour permettre le passage d'un chariot de maintenance 34 roulant sur des rails horizontaux 35 réunis par des traverses 36. Lorsque la porte de visite est fermée, l'intérieur de l'enveloppe est isolé de façon pratiquement étanche de l'extérieur. Le chariot 34, lorsqu'il n'est pas utilisé, est rangé dans le sas 30.

Le tube 20 est un tube métallique horizontal traversant le sas 30, la cloison 31 et l'enveloppe 10 sur toute sa longueur. Un tube transparent 21, par exemple en verre, entoure le tube 20 en étant espacé de celui-ci pour obtenir l'effet de serre. Ce récepteur pourrait être de tout autre type connu.

Conformément à l'invention, l'enveloppe 10 est formée d'un panneau supérieur souple 11 et d'un panneau inférieur souple 12 situés de part et d'autre d'un plan horizontal P et réunis le long de leurs bords longitudinaux au moyen de longerons rigides 13. L'écartement L des longerons est choisi à une valeur comprise entre 0,8 et 0,95 fois la largeur du panneau supérieur, lorsque celui-ci est à l'état plan. Ainsi, la hauteur H du capteur au-dessus du plan P est nettement inférieure à L/2. Conformément à l'invention, la partie inférieure du capteur, au-dessous du plan P, est protégée par deux parois verticales 40 fixées à leurs sommets aux longerons 13. De ce fait, on conçoit que le capteur offre une prise au vent minimale et que notamment la partie formant miroir est totalement à l'abri de l'effet d'un vent latéral.

La résistance de la partie supérieure exposée 11 du capteur aux efforts transversaux peut encore être améliorée en la réduisant en au moins deux parties souples 111 et 112 partageant le panneau 11 dans le sens longitudinal et réunies le long de leurs bords adjacents au moyen d'un longeron rigide 15.

De préférence, la largeur du panneau inférieur 12 à l'état plan est choisie voisine de 1,3 L, ce qui correspond à un développement de 150° du miroir circulaire, afin que les rayons solaires renvoyés par le revêtement réfléchissant prévu sur la face intérieure du panneau 12 pour être concentrés sur le tube 21 le soient déjà pour une faible hauteur du soleil au-dessus de l'horizon et pour un angle zénithal important.

Le panneau 12 présente, de ce fait, un rayon de courbure plus petit que le panneau 11, l'enveloppe ayant alors, en section transversale, une forme biconvexe dissymétrique. Aux extrémités de l'enveloppe, les panneaux 11 et 12 ont leurs bords extrêmes enserrés dans des cadres 14 ayant la même forme biconvexe que la section droite de l'enveloppe 10 gonflée.

Un mode particulier de réalisation de la liaison entre les bords longitudinaux des panneaux 11 et 12 est illustré en détail sur la fig. 4.

Chaque longeron 13 comporte un profilé métallique en I 131, sur les ailes duquel sont soudés, du même côté, deux tubes 132, 133 présentant des fentes d'accès longitudinales 134, 135 s'ouvrant toutes deux en direction de l'intérieur de l'enveloppe 10. Les bords à réunir 11a et 12a des panneaux 11 et 12 sont munis d'ourlets 11b et 12b introduits dans les tubes 132, 133 à travers les fentes 134, 135. Des tiges 136, 137 sont enfilées dans les ourlets 11b, 12b à l'intérieur des tubes 132, 133. Les tiges 136, 137, ayant un diamètre supérieur à la largeur des fentes 134, 135, immobilisent les bords longitudinaux des panneaux 11, 12 dans les tubes 132, 133. Les tiges 136, 137 sont des éléments rigides, par exemple des tubes, ou bien encore des éléments creux rigidifiés après mise en place par gonflage. Des bandes de caoutchouc 138, 139 peuvent être interposées entre les bords de chaque fente et le bord du panneau pour éviter une détérioration de ce dernier.

Bien entendu, d'autres modes de réalisation de la liaison entre les bords longitudinaux des panneaux pourront être prévus.

Lorsque le panneau supérieur 11 est formé en plusieurs parties ou bandes longitudinales assemblées le long de leurs bords adjacents par un longeron rigide, la liaison entre ces bords pourra être réalisée de la même façon que décrit ci-dessus pour la liaison des bords des panneaux 11 et 12.

Ainsi, les parties de panneau 111 et 112 ont leurs bords adjacents 111a et 112a immobilisés dans des tubes 152 et 153 soudés sur un profilé 151, ces bords 111a, 112a étant munis d'ourlets introduits à travers des fentes longitudinales d'accès à ces tubes et dans lesquels sont enfilées des tiges de blocage (fig. 3). Des bandes de protection (non représentées) peuvent être interposées entre les bords des fentes d'accès et les bords 111a, 112a.

Le panneau souple supérieur 11, s'il est en une seule pièce, ou chaque partie souple le constituant, s'il est en plusieurs pièces, est réalisé(e) en une matière synthétique transparente telle que, par exemple, un film de polyéthylène traité contre le vieillissement par les rayons ultraviolets.

Le panneau souple inférieur 12 est, par exemple, constitué par un film polyester revêtu d'une couche réfléchissante, par exemple aluminisé, sur sa face intérieure.

Chaque panneau 12 peut, en plan, avoir une largeur de plusieurs mètres, largeur plusieurs fois supérieure à celle des films de polyester métallisé du commerce. Chaque panneau doit alors être réalisé par assemblabe de plusieurs bandes. Cet assemblage est, de préférence, réalisé avec des bandes disposées transversalement pour les motifs exposés ci-dessus.

Dans le cas par exemple du panneau 12 (fig. 5), on peut réaliser l'assemblage en plaçant le nombre nécessaire de tronçons de bande 121a, 121b, ..., 121n, bord à bord, transversalement par rapport au panneau, puis en assemblant les tronçons au moyen de rubans souples 122a, 122b, ..., 122n−1, appliqués chacun par-dessus les bords adjacents de deux tronçons voisins et collés sur ces bords. On pourra utiliser des rubans adhésifs collant par simple pression ou des rubans portant une couche de matière thermocollante et appliqués sous pression et à chaud.

Lorsque les tronçons de bande 121 sont relativement longs et lorsque la bande est constituée par un film plastique mince, le positionnement bord à bord de façon correcte est facilité si on les dispose, au moins le long de leurs bords à placer de façon jointive, sur une surface 41 (fig. 6) d'une table 42, surface percée d'orifices 43 raccordés à une source de vide.

De même, le ruban 122 à placer sur ces bords est appliqué contre la surface inférieure 44 d'un applicateur 45, surface percée d'orifices 46 raccordés à une source de vide. L'applicateur 45 est appliqué avec pression contre la table 42 pour coller le ruban 122 par-dessus les bords des tronçons. Ensuite, la liaison des orifices 46 avec la source de vide est interrompue et l'applicateur 45 est ramené dans sa position de départ au-dessus de la table 42. Les orifices 43 sont, à leur tour, coupés de la source de vide pour retirer les tronçons 121 assemblés. Une bande souple 47, par exemple en mousse de polyuréthanne, peut être interposée entre la surface 44 de l'applicateur et le ruban 122 de manière à permettre une application uniforme de celui-ci par répartition de la pression exercée tout le long de l'applicateur.

Le capteur est muni d'un dispositif de poursuite d'un type quelconque connu pour positionner le tube 20 en fonction de la position du soleil, de manière que le tube 20 reçoive un maximum de l'énergie rayonnée par la surface réfléchissante du panneau 12.

Les tubes 20 et 21 (fig. 3) sont, par exemple, suspendus par au moins deux bras 27 aux supports 25, situés au voisinage du sommet du capteur. Les bras 27 peuvent pivoter sur les supports 25 autour d'un axe coïncidant sensiblement avec l'axe de la surface cylindrique 12 et le pivotement est commandé par un dispositif moteur asservi au dispositif de poursuite.

A titre d'exemple, le dispositif moteur illustré est constitué par un câble 22 fixé à ses extrémités, d'une part, sur le tube 21, d'autre part, sur un arbre 23 qui peut être entraîné en rotation au moyen d'un moteur (non représenté) asservi au dispositif de poursuite. Un ressort 24, travaillant en compression ou en traction, est fixé à ses extrémités sur le support 25 et le bras 27. Ainsi, lorsque l'arbre 23 tourne, le tube 20 est déplacé sur une surface cylindrique, de façon à rester à l'emplacement optimal correspondant à la position du soleil.

## Revendications

1. Un capteur solaire du type à miroir de forme cylindrique et de directrice circulaire mis en forme par une pression gazeuse comportant un cadre rigide ayant en plan une forme sensiblement rectangulaire définissant au moins deux bords longitudinaux (13) avec au moins une feuille déformable (12) fixée par ses bords sur lesdits bords longitudinaux du cadre, la surface intérieure de cette feuille (12) étant réfléchissante, avec un élément transparent (11) étanche à la pression gazeuse de mise en forme du miroir fermant le volume, caractérisé en ce que le cadre (13) est fixe et en ce que le volume entourant la surface extérieure de la feuille réfléchissante déformable est délimité par rapport à l'environnement par des parois (40) indéformables sous les effets du vent.

2. Un capteur solaire selon la revendication 1, caractérisé en ce que l'élément transparent est réalisé par une feuille souple (11) mise en forme par la pression gazeuse, la largeur de cette feuille souple transparente étant inférieure à 125% de l'écartement entre les deux bords longitudinaux (13) du cadre.

3. Un capteur solaire selon l'une des revendications 1 ou 2, caractérisé en ce qu'au moins un renfort longitudinal (15), rigide au moins dans le sens transversal, est associé mécaniquement à la feuille transparente (11).

4. Un capteur solaire selon l'une des revendications 1 à 3, caractérisé en ce que la largeur de la feuille inférieure (12) formant miroir est sensiblement égale à 130% de l'écartement entre les deux bords longitudinaux (13) du cadre.

5. Un capteur solaire selon l'une des revendications 1 à 4, caractérisé en ce que les bords longitudinaux (13) du cadre et les éléments de renfort (15) de la feuille supérieure (11) sont constitués par des éléments mécaniquement rigides (131, 151) présentant deux gorges tubulaires ouvertes (132, 133, 152, 153) par une fente (134, 135) selon une génératrice, le bord plié (11b, 12b, 111a, 112a) de chaque feuille souple (11, 12) aboutissant à chaque élément étant introduit par la fente dans la gorge tubulaire correspondante avec un élément (136, 137) de largeur supérieure à la largeur de la fente introduit dans le pli à l'intérieur de la gorge.

6. Un capteur solaire selon l'une des revendications 1 à 5, caractérisé en ce que les feuilles souples sont obtenues par juxtaposition bord à bord de bandes transversales (121a, 121b).

7. Un capteur solaire selon la revendication 6, caractérisé en ce que les bandes transversales (121a, 121n) disposées bord à bord sont réunies au moyen d'un ruban (122a, 122n−1) collé sur leurs bords adjacents.

8. Un procédé de fabrication des feuilles souples de grande largeur du capteur solaire selon l'une des revendications 6 ou 7, caractérisé en ce que l'on maintient les bandes transversales, et notamment leurs bords, pendant les opérations d'assemblage, sur une table (42) percée d'orifices (43) en communication avec une source de vide, au moins dans la partie de sa surface correspondant aux bords des bandes (121).

## Patentansprüche

1. Sonnenkollektor in Art eines Spiegels in zylindrischer Form und mit kreisbogenförmiger Krümmung, der durch Gasdruck geformt ist und der einen steifen Rahmen von in der Ebene annähernd rechtwinkeliger Form mit mindestens zwei Längsleisten (13) aufweist, mit mindestens einem verformbaren Blatt (12), das mit seinen Rändern an diesen Längsleisten des Rahmens befestigt ist, wobei die innere Oberfläche dieses Blattes (12) reflektierend ist, mit einem transparenten Element (11), das den Innenraum gegenüber dem den Spiegel formenden Gasdruck dicht abschliesst, dadurch gekennzeichnet, dass der Rahmen (13) feststehend ist und dass der Raum, der die äussere Oberfläche des verformbaren, reflektierenden Blattes umgibt, durch gegenüber Einwirkungen des Windes unverformbare Wandungen (40) gegenüber der Umgebung abgegrenzt ist.

2. Sonnenkollektor nach Anspruch 1, dadurch gekennzeichnet, dass das transparente Element aus einem durch Gasdruck geformten, dehnbaren Blatt (11) gebildet ist, wobei die Breite dieses transparenten, dehnbaren Blattes geringer als 125% des Abstandes zwischen den zwei Längsleisten (13) des Rahmens ist.

3. Sonnenkollektor nach einem der beiden Ansprüche 1 oder 2, dadurch gekennzeichnet, dass mindestens eine steife Verstärkung (15) der Länge nach zumindest in transversaler Richtung mit dem transparenten Blatt (11) mechanisch verbunden ist.

4. Sonnenkollektor nach einem der Ansprüche 1 bis 3, dadurch gekennzeichnet, dass die Breite des unteren Blattes (12), das den Spiegel bildet, annähernd 130% des Abstandes zwischen den zwei Längsleisten (13) des Rahmens gleich ist.

5. Sonnenkollektor nach einem der Ansprüche 1 bis 4, dadurch gekennzeichnet, dass die Längsleisten (13) des Rahmens und die Verstärkungselemente (15) des oberen Blattes (11) aus mechanisch steifen Elementen (131, 151) bestehen, die zwei röhrenförmige Rinnen (132, 133, 152, 153) bilden, welche mittels eines längs einer Erzeugenden verlaufenden Spaltes (134, 135) offen sind, wobei der gefalzte Rand (11b, 12b, 111a, 112a) eines jeden dehnbaren Blattes (11, 12), der bis zu jedem Element reicht und durch den Spalt in die röhrenförmigen Rinnen eingeführt ist, mit einem Element (136, 137) zusammenwirkt, dessen Querschnitt grösser als die Breite des Spaltes ist und das in die Beuge im Inneren der Rinne eingeführt ist.

6. Sonnenkollektor nach einem der Ansprüche 1 bis 5, dadurch gekennzeichnet, dass die dehnbaren Blätter durch Aneinanderreihung von Rand an Rand liegenden Querstreifen (121a, 121b) hergestellt sind.

7. Sonnenkollektor nach Anspruch 6, dadurch gekennzeichnet, dass die Querstreifen (121a, 121n), die Rand an Rand liegend aneinandergereiht sind, mit Hilfe eines Bandes (122a, 122n−1) verbunden sind, das über deren aneinanderliegende Ränder geklebt ist.

8. Herstellungsverfahren von dehnbaren Blättern mit grossen Dimensionen eines Sonnenkollektors nach einem der beiden Ansprüche 6 oder 7, dadurch gekennzeichnet, dass man die Querstreifen und insbesondere ihre Ränder während der Vorgänge des Zusammenfügens auf einem Tisch (42), der zumindest im Bereich seiner Oberfläche, die den Rändern der Streifen entspricht, von Ausnehmungen (43) durchsetzt ist, mit einer Unterdruckquelle in Verbindung hält.

## Claims

1. A solar collector of the mirror type having a cylindrical shape and a circular director line shaped by a gas pressure comprising a rigid frame having in plane view a substantially rectangular shape defining at least two longitudinal edges (13) with at least one deformable sheet (12) secured at its edges onto said longitudinal edges of the frame, the internal surface of said sheet (12) being reflective, with a transparent element (11) impervious to the mirror-shaping gas pressure closing the volume, characterized in that the frame (13) is stationary and in that the space surrounding the external surface of the deformable reflective sheet is delimited from the surroundings by walls (40) which cannot be deformed under wind effects.

2. A solar collector according to claim 1, characterized in that the transparent element is made of a flexible sheet (11) shaped by the gas pressure, the width of this transparent flexible sheet being less than 125% of the spacing between the two longitudinal edges (13) of the frame.

3. A solar collector according to one of claims 1 or 2, characterized in that at least one longitudinal reinforcement (15), which is rigid at least in the cross direction, is mechanically associated with the transparent sheet (11).

4. A solar collector according to any of claims 1 to 3, characterized in that the width of the lower, mirror-forming sheet (12) is substantially equal to 130% of the spacing between the two longitudinal edges (13) of the frame.

5. A solar collector according to any of claims 1 to 4, characterized in that the longitudinal edges (13) of the frame and the reinforcing elements (15) for the upper sheet (11) consist of mechanically rigid elements (131, 151) having two tubular grooves (132, 133, 152, 153) opening through a slot (134, 135) along a generatrix, the folded edge (11b, 12b, 111a, 112a) of each flexible sheet (11, 12) which ends at each element being inserted through the slot into the corresponding tubular groove with an element (136, 137) of a width greater than the slot width being inserted in the fold within the groove.

6. A solar collector according to any of claims 1 to 5, characterized in that the flexible sheets are obtained by edge-to-edge juxtaposition of transverse strips (121a, 121b).

7. A solar collector according to claim 6, characterized in that the transverse strips (121a, 121n) in edge-to-edge arrangement are interconnected by means of a tape (122a, 122n−1) adhered to their adjacent edges.

8. A method of producing the flexibles sheets of large width for the solar collector according to one of claims 6 or 7, characterized in that the transverse strips and especially their edges are kept during the assembling steps, onto a table (42) provided with apertures (43) in communication with a vacuum source, at least in the portion of its surface corresponding to the edges of the strips (121).

0 030 193

Fig:1

Fig:2

Fig:3

9

0 030 193

Fig. 4

Fig. 5

Fig. 6